# EUROPEAN PATENT APPLICATION

(11) **EP 3 070 920 A1**
(43) Date of publication of application: **21.09.2016**
(21) Application number: 15184621.9
(22) Date of filing: 10.09.2015
(51) Int. Cl.: H04N 1/00

(54) **IMAGE FORMING DEVICE AND IMAGE FORMING METHOD**

(30) Priority: 19.03.2015 JP 2015055673
(71) Applicant: Oki Data Corporation, Tokyo 108-8551 (JP)
(72) Inventor: Sato, Masato, Tokyo, 108-8551 (JP)
(74) Representative: Piotrowicz, Pawel Jan Andrzej

(57) **Abstract**

In order to enable to carry out remote maintenance on the basis of scanned image data, MFP 110 includes panel unit 112; control unit 115 to change a mode of MFP 110 to a remote maintenance mode for carrying out remote maintenance on the basis of input of operations to panel unit 112; transmitting and receiving unit 111 to receive image forming instructions and image reading instructions; printing unit 113 to form an image on a medium on the basis of image data for remote maintenance according to the image forming instructions; and scanning unit 114 to read the medium on which the image is formed by printing unit 113 and generates read image data according to the image reading instructions; wherein transmitting and receiving unit 111 transmits the read image data generated by scanning unit 114.

## Description

### BACKGROUND OF THE INVENTION

### 1. Field of the Invention

The present invention relates to an image forming device and an image forming method, particularly an image forming device and an image forming method which make it possible to carry out remote maintenance.

### 2. Description of the Related Art

There is a conventional device that stores scanned image data in a common folder on a network. The conventional device is disclosed by Mishima et al. in Japanese Patent Application Publication No. 2005-94444.

The conventional device simply stores the scanned image data in the common folder on the network. So, it is not impossible to carry out remote maintenance on the basis of the scanned image data.

### SUMMARY OF THE INVENTION

An object of the present invention is to make it possible to carry out remote maintenance on the basis of scanned image data.

In one aspect, the invention provides an image forming device including an operation unit to receive input of operations, a managing unit to change a mode of the image forming device from a normal mode to a remote maintenance mode for carrying out remote maintenance on the basis of the input of the operations received by the operation unit, a receiving unit to receive image forming instructions and image reading instructions in the remote maintenance mode, an image forming unit to form an image on a medium on the basis of image data for remote maintenance according to the image forming instructions in the remote maintenance mode, an image reading unit to read the medium on which the image is formed by the image forming unit according to the image reading instructions in the remote maintenance mode, thereby generating read image data, and a transmitting unit to transmit the read image data generated by the image reading unit in the remote maintenance mode.

In another aspect, the invention provides an image forming method that is carried in an image forming device, that includes:
receiving input of operations;
changing a mode of the image forming device from a normal mode to a remote maintenance mode for carrying out remote maintenance on the basis of the input of the operations;
receiving image forming instructions in the remote maintenance mode;
forming an image on a medium on the basis of image data for remote maintenance according to the image forming instructions in the remote maintenance mode;
receiving image reading instructions in the remote maintenance mode;
reading the medium on which the image is formed-according to the image reading instructions in the remote maintenance mode, thereby generating read image data;
transmitting the read image data generated in the remote maintenance mode; and
changing the mode of the image forming device from the remote maintenance mode to the another mode.

According to one aspect of the present invention, it is possible to carry out remote maintenance on the basis of scanned image data.

### BREIF DESCRIPTION OF THE DRAWINGS

In the attached drawings:
FIG 1 is a schematic diagram showing a remote maintenance system including an MFP (multifunction peripheral) in a first embodiment;
FIG. 2 is a block diagram schematically showing the structure of the MFP in the first embodiment;
FIG. 3 is a schematic diagram showing an example of a panel unit in the first embodiment;
FIG 4 is a block diagram schematically showing the structure of a support server in the first embodiment;
FIG 5 is a block diagram schematically showing the structure of a file server in the first embodiment;
FIG. 6 is a sequence diagram showing an outline of processes carried out in a user side and a support center side when an error is occurred in the MFP in the first embodiment;
FIG 7 is a schematic diagram showing an example of a screen displayed in a display unit when test conditions are selected in the first embodiment;
FIG 8 is a sequence diagram showing processes in which the MFP in the first embodiment communicates with servers in the support center side, obtains test pattern image data, and carries out printing;
FIG 9 is a flowchart showing processes executed by the MFP when a start button is pressed on the MFP in the first embodiment and a request for a command is started;
FIG. 10 is a flowchart showing processes executed by the MFP when a command is processed in the first embodiment;
FIG 11 is a flowchart showing processes when the support server receives a command request from the MFP in the first embodiment;
FIG 12 is a sequence diagram showing processes in which the MFP communicates with servers in the support center side and transmits scanned data in the first embodiment;
FIG 13 is a flowchart showing processes executed by the MFP when a command is processed in the first embodiment;
FIG 14 is a block diagram schematically showing the structure of a support server in a second embodiment; and
FIG 15 is a schematic diagram showing an example of a screen displayed on a display unit when test conditions are selected in the second embodiment.

### DETAILED DESCRIPTION OF THE INVENTION

### First Embodiment

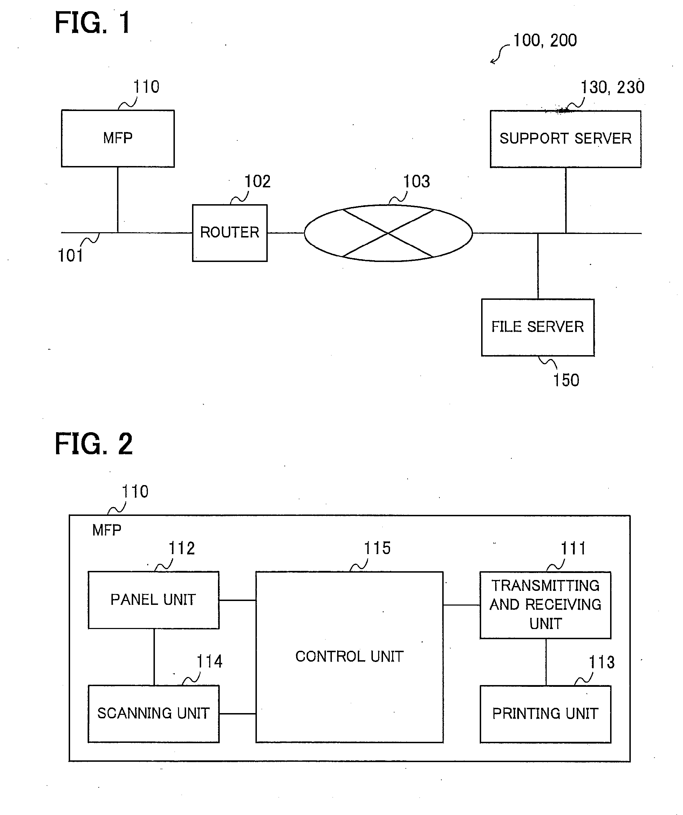

FIG 1 is a schematic diagram showing a remote maintenance system 100 including an MFP 110 as an image forming device in the first embodiment.

The remote maintenance system 100 is roughly divided into two parts. The two parts are the part of "a user side" where the MFP 110 is connected and the part of "a support center side" where a support server 130 and a file server 150 as external devices are connected.

In the user side, the MFP 110 is connected to a LAN (Local Area Network) 101 and-can access to the Internet 103 via a router 102.

In the support center side, the support server 130 that supports a solution of a problem when an error occurs is connected to the Internet 103. Besides, the file server 150 that stores files received for printing in the MFP 110 and files transmitted as scanned data is connected to the Internet 103.

The MFP 110 can access the support server 130 and the file server 150 through the Internet 103. In addition, host names as device identification information for identifying each device are assigned to the support server 130 and the file server 150. The host name of the support server 130 is "support.cloud.com"; the host name of the file server 150 is "file.service.com".

FIG 2 is a block diagram schematically showing the structure of the MFP 110 in the first embodiment.

The MFP 110 includes a transmitting and receiving unit 111, a panel unit 112, a printing unit 113, a scanning unit 114, and a control unit 115.

The transmitting and receiving unit 111 functions as a transmitting unit to transmit data and a receiving unit to receive data. The transmitting and receiving unit 111 is connected to the LAN 101. The transmitting and receiving unit 111 is implemented by a network card, for example.

The panel unit 112 functions as an operation unit (input unit) to receive input of operations and as a display unit. The panel unit 112 is, for example, an operation panel such as a-touchscreen.

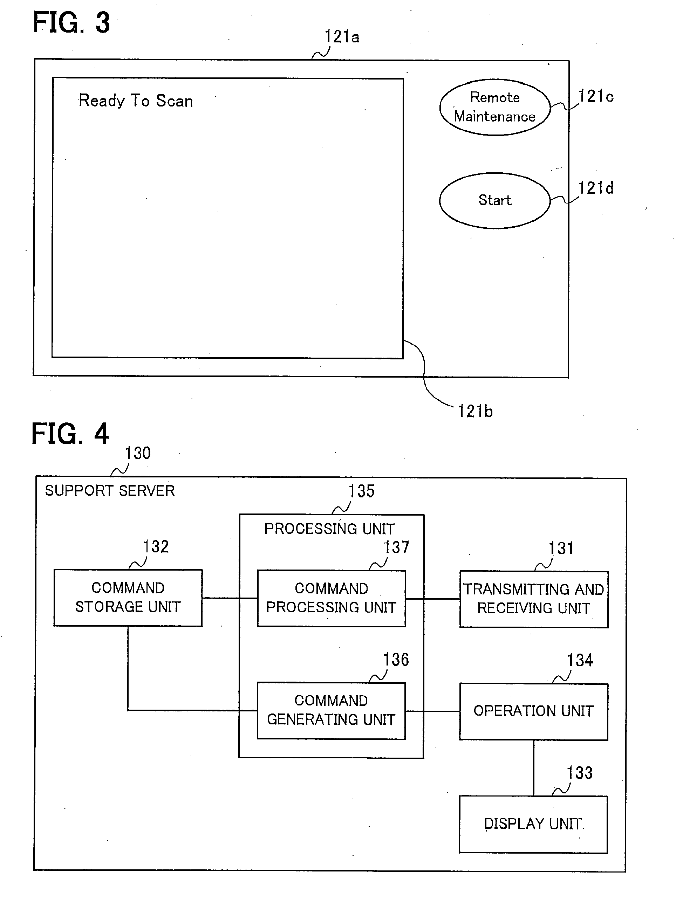

FIG 3 is a schematic diagram showing an example of the panel unit 112.

The panel unit 112 comprises a touchscreen 121 a.

The touchscreen 121a includes a display area 121b, a remote maintenance button 121c, and a start button 121 d.

The display area 121b is an area for displaying various kinds of screens showing the status of the MFP-and others.

The remote maintenance button 121c is an area pressed for providing instructions to start investigation of causes of errors on occurring the errors. Pressing the button 121c causes the MFP 110 to shift from a normal mode (a first mode) for carrying out printing (forming image), scanning (image reading), and facsimile transmitting and receiving as usual to a remote maintenance mode (a second mode) for investigating sources of trouble.

The start button 121d is an area pressed for providing instructions to start printing or scanning.

Referring again to FIG. 2, the printing unit 113 is an image forming unit for printing (forming images) on media on the basis of image data.

The scanning unit 114 is an image reading unit for scanning original documents. Specifically, the scanning unit 114 reads media on which images are formed by the printing unit 113 and generates scan data (read image data).

The control unit 115 is a controller to control processes in the MFP 110. For example, the control unit 115 functions as a managing unit to manage the modes of the MFP 110. Besides, the control unit 115 functions as an obtaining unit to obtain image data for remote maintenance from the file server 150. In addition, the control unit 115 controls transmission of command requests to external servers and reception of commands from external servers.

The control unit 115 can be implemented by a processor such as a CPU (Central Processing Unit) that executes programs stored in a storage unit (a non-volatile memory or a volatile memory) not shown in the drawings, for example.

FIG. 4 is a block diagram schematically showing the structure of the support server 130.

The support server 130 includes a transmitting and receiving unit 131, a command storage unit 132, a display unit 133, an operation unit 134, and a processing unit 135.

The transmitting and receiving unit 131 functions as a transmitting unit to transmit data and a receiving unit to receive data. The transmitting and receiving unit 131 is connected with the Internet 103.

The command storage unit 132 is a storage area to store command files. The command storage unit 132 stores, for example, a printing start command file (an image forming start command file) and a scan start command file (an image reading start command file), which are generated by the processing unit 135, with both the files associated with each other.

The display unit 133 displays various kinds of screens. The display unit 133 displays, for example, an operation screen for generating command files.

The operation unit 134 is an input unit to receive input of operations. The operation unit 134 receives, for example, input of operations for generating the command files.

The processing unit 135 controls processes in the support server 130. The processing unit 135 includes a command generating unit 136 and a command processing unit 137.

The command generating unit 136 generates command files according to the contents of operations in the operation unit 134. The command files generated by the command generating unit 136 are stored in the command storage unit 132.

The command processing unit 137 controls responses to command requests received from the outside of the server. On receiving command requests, the command processing unit 137 refers to command files stored in the command storage unit 132 and makes responses to the command requests.

The support server 130 described above may be implemented, for example, by a general computer which includes a CPU, a memory, an external storage device such as a HDD (Hard Disk Drive), an input device such as a keyboard or a mouse, an display device such as a display, and a communication device such as a network interface which enables access to a communication network.

For example, the command storage unit 132 may be implemented in a way that the CPU uses the memory or the external storage device; the processing unit 135 may be implemented by loading a predetermined program stored in the external storage device to the memory and by causing the CPU to execute the loaded program; the operation unit 134 may be implemented in a way that the CPU uses the input device; the display unit 133 may be implemented in a way that the CPU uses the display device; and the transmitting and receiving unit 131 may be implemented in a way that the CPU uses the communication device.

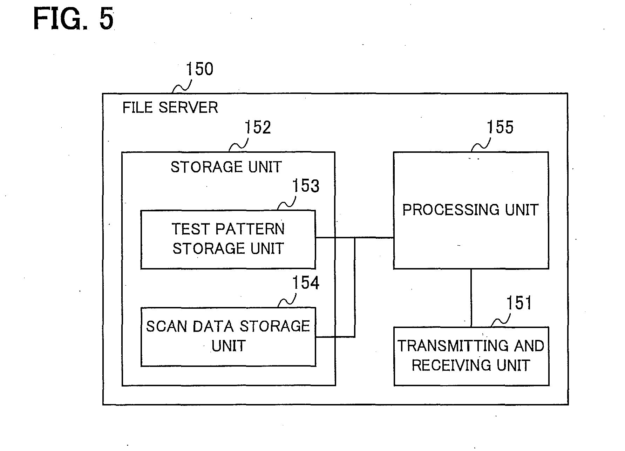

FIG. 5 is a block diagram schematically showing the structure of the file server 150. The file server 150 includes a transmitting and receiving unit 151, a storage unit 152, and a processing unit 155.

The transmitting and receiving unit 151 functions as a transmitting unit to transmit data and a receiving unit to receive data. The transmitting and receiving unit 151 is connected with the Internet 103.

The storage unit 152 is a storage area to store data necessary for processes in the file server 150. The storage unit 152 includes a test pattern storage unit 153 and a scan data storage unit 154.

The test pattern storage unit 153 is a storage area to store image data to be printed by the MFP 110. A plurality of image data items are stored corresponding to test patterns for investigation of causes of errors.

The scan data storage unit 154 is a storage area to store scan data scanned by the MFP 110.

The processing unit 155 controls processes in the file server 150. For example, the processing unit 155 causes the transmitting and receiving unit 151 to transmit image data stored in the test pattern storage unit 153 in response to requests from the MFP 110. Besides, when the transmitting and receiving unit 151 receives scan data, the processing unit 155 stores the scan data in the scan data storage unit 154. In addition, the processing unit 155 causes the transmitting and receiving unit 151 to transmit the scan data stored in the scan data storage unit 154 in response to requests from the support server 130.

The file server 150 described above may be implemented, for example, by a general computer which includes a CPU, a memory, an external storage device such as a HDD, and a communication device such as a network interface which enables access to a communication network.

For example, the storage unit 152 may be implemented in a way that the CPU uses the memory or the external storage device; the processing unit 155 may be implemented by loading a predetermined program stored in the external storage device to the memory and causing the CPU to execute the loaded program; and the transmitting and receiving unit 151 may be implemented in a way that the CPU uses the communication device.

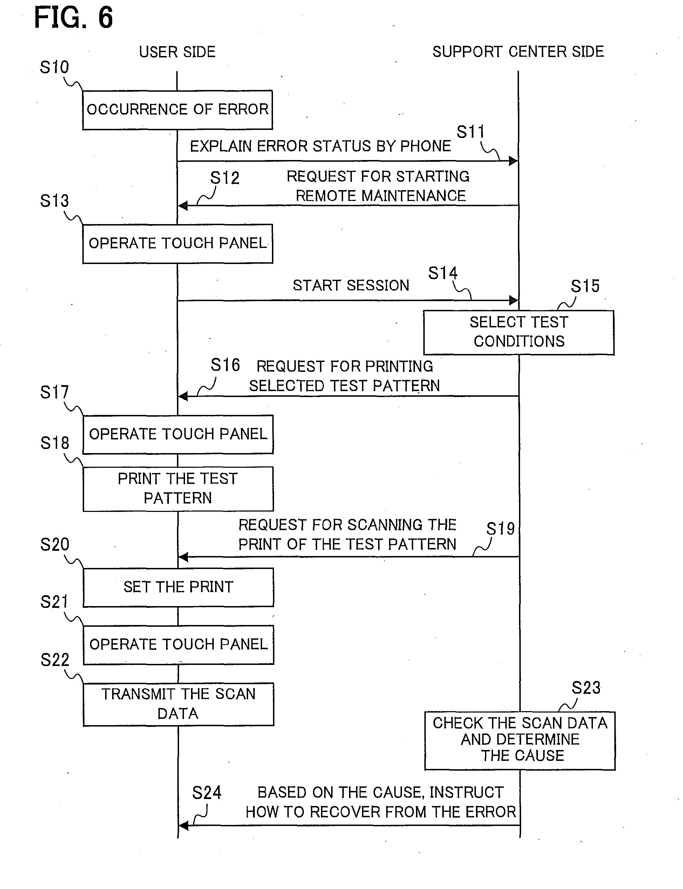

FIG 6 is a sequence diagram showing an outline of processes carried out in the user side and the support center side when an error is occurred in the MFP 110.

When there is a problem in a result of printing by the MFP 110 (S10), the user contacts the support center by phone and reports the content of the problem (S 11).

In a consequence of hearing the error contents by the phone, if a person in charge of the support center judges that it is necessary to check a result actually printed on the basis of a test pattern selected by the support center, the person in charge requests the user to start remote maintenance (S 12). Specifically, the person in charge requests the user to press the remote maintenance button 121c displayed on the panel unit 112 of the MFP 110 (see FIG 3).

According to this request, the user operates the panel unit 112 of the MFP 110 to press the remote maintenance button 121c (S13).

When the remote maintenance button 121c is pressed, the MFP 110 shifts to a remote maintenance mode by starting a session with the support server 130 in the support center side (S14). When the session with the MFP 110 is started, the command processing unit 137 of the support server 130 assigns, to the session, a session ID as session identification information unique for each session in order to identify the session.

For example, when the session between the support server 130 and the MFP 110 is started, identification information for identifying the MFP 110 which starts the session is displayed on the display unit 133 of the support server 130. When the person in charge of the support center selects the identification information displayed on the display unit 133 and inputs an executing command, the session ID between the support server 130 and MFP 110 is treated as it is assigned to the calling user.

Then the person in charge of the support center selects test conditions for diagnosing the cause of the error.

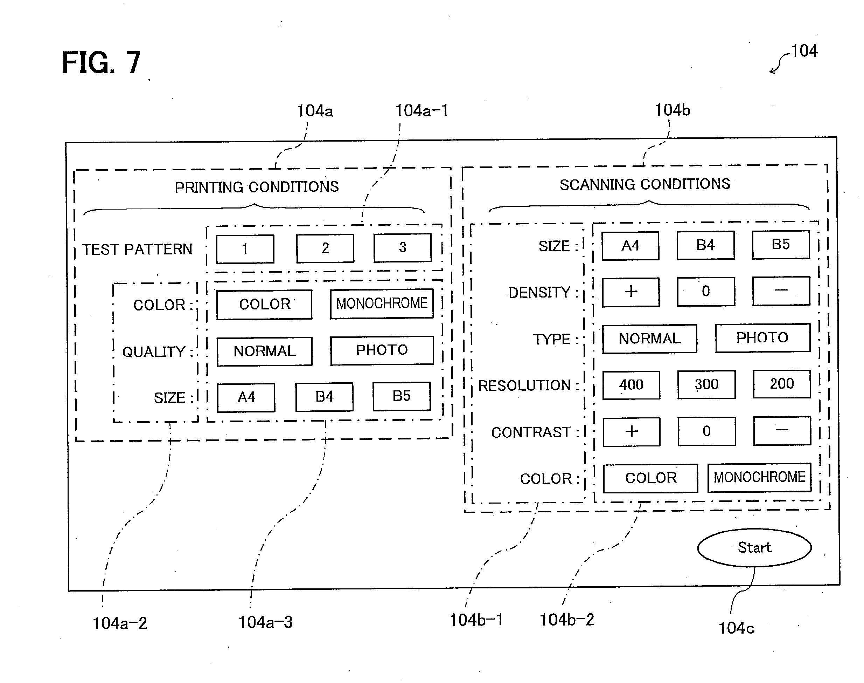

FIG. 7 is a schematic diagram showing an example of a screen displayed on the display unit 133 when the test conditions are selected.

A conditions selecting screen 104 has a printing conditions selecting area (an image forming conditions selecting area) 104a, a scanning conditions selecting area (an image reading conditions selecting area) 104b, and a start button 104c.

The printing conditions selecting area 104a is an area for selecting printing conditions (image forming conditions). The printing conditions selecting area 104a has a test pattern selecting area 104a-1, a printing parameter item showing area 104a-2 showing items of printing parameters (image forming parameters), and a printing parameter selecting area 104a-3 for selecting values of the printing parameters. The person in charge of the support center, using the operation unit 134, selects image data to be used as a test pattern from the test pattern selecting area 104a-1 and selects any value out of the values shown in the printing parameter selecting area 104a-3 for each item shown in the printing parameter item showing area 104a-2.

The scanning conditions selecting area 104b is an area for selecting scanning conditions (image reading conditions). The scanning conditions selecting area 104b has a scanning parameter item showing area 104b-1 showing items of scanning parameters (image reading parameters), and a scanning parameters selecting area 104b-2 for selecting values of the scanning parameters. The person in charge of the support center, using the operation unit 134, selects any value out of the values shown in the scanning parameters selecting area 104b-2 or inputs suitable values for each item shown in the scanning parameter item showing area 104b-1.

The start button 104c is an area for inputting instructions to generate command files on the basis of the values selected or input in the printing conditions selecting area 104a and scanning conditions selecting area 104b. When the start button 104c is pressed, the command generating unit 136 generates, on the basis of the values selected in the printing conditions selecting area 104a, a printing start command file including a printing start command (an image forming start command) that includes printing conditions and printing instructions (image forming instructions) for causing-the MFP 110 to perform printing, and stores the generated file in the command storage unit 132. In addition, the command generating unit 136 generates, on the basis of the values selected or input in the scanning conditions selecting area 104b, a scanning start command file including a scanning start command (an image reading start command) that includes scanning conditions and scanning instructions (image reading instructions) for causing the MFP 110 to scan, and stores the generated file in the command storage unit 132.

For example, if an image is faintly printed, the person in charge of the support center selects higher value than normal in the density of the scanning conditions. Besides, if one or more color toners are thin, the person in charge of the support center changes the settings of RGB in the scanning conditions. In addition, if the default settings of the user's device are different from the normal default settings of other devices, the person in charge of the support center selects the test conditions.so as to correspond to the normal default settings of other devices.

The printing start command file and scanning start command file generated here are associated with each other and stored in the command storage unit 132. For example, these files can be associated with each other by associating these files with the session ID generated when the session is started in step S14. These files can be associated with each other, more specifically, by including the session ID in the file names of these files. Besides, these files can be associated with each other by storing, in the command storage unit 132, file management information (for example, a file management table in a table format) relating file identification information (for example, file names) for identifying these files to the session ID generated when the session is started in step S14. In addition, the printing start command file and the scanning start command file may be stored in a storage area allocated to the session ID. By associating these files with each other, the printing conditions and the scanning conditions in these files are also associated with each other.

The explanation will be made by referring to FIG 6 again. The person in charge of the support center requests, by phone, the user to start printing by pressing the start button 121 d (see FIG. 3) displayed in the panel unit 112 of the MFP 110 (S 16).

Receiving this request, the user presses the start button 121 d (S17). The MFP 110 communicates with the servers 130,150 in the support center side, receives the image data of the test pattern, and carries out printing in the printing unit 113 (S18). The details of the communication between the MFP 110 and servers 130,150 in the support center side are described later.

Next, the person in charge of the support center requests, by phone, the user to start scanning by setting the printed result (the original document) on the scanning unit 114 of the MFP 110 and by pressing the start button 121 d of the panel unit 112 (S19).

Receiving this request, the user sets the printed original document on the scanning unit 114 of the MFP 110 (S20).

Next, the user presses the start button 121 d on the panel unit 112 of the MFP 110 (S21).

And then, the MFP 110 scans the original document with the scanning unit 114, generates the scan data, and communicates with the servers 130,150 in the support center side to transmit the scan data (S22). The details of the communication between the MFP 110 and servers 130, 150 are described later.

The person in charge of the support center checks the image data stored in the file server 150 and determines the cause of a problem in the printed result (S23).

The person in charge of the support center then instructs, by phone, the user how to solve the problem the printed result (S24).

After completion of the instructions, the session is closed according to a request from the MFP 110 or support server 130 and the MFP 110 shifts from the remote maintenance mode to the normal mode.

In the sequence shown in FIG. 6, although the user and the person in charge of the support center communicate by phone, this is an example, and so the invention is not limited to the example. The communication may be carried out by other communication means such as e-mail and facsimile transmission.

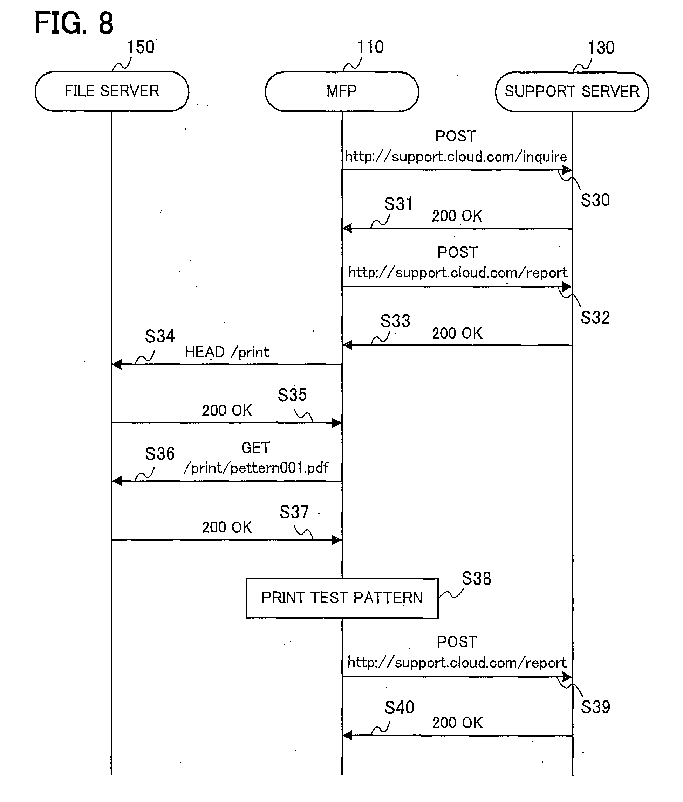

FIG 8 is a sequence diagram showing processes in which the MFP 111 communicates with the servers 130, 150 in the support center side, obtains the image data of the test pattern, and carries out printing.

When the start button 121 d on the panel unit 112 is pressed, the control unit 115 of the MFP 110 transmits a command request to the support server 130 in the support center side via the transmitting and receiving unit 111 in order to inquire a command (S30). The command request is transmitted, for example, to a destination "http://support.cloud.com/inquire" according to POST method of HTTP.

It is assumed that the command processing unit 137 of the support server 130 recognizes a command request received first after the session is started as a command request for starting to print and recognizes a command request received after transmission of a printing start command as a command request for starting to scan.

In the support sever 130, a printing start command has been already generated according to the test conditions selected by the person in charge of the support center, associated with the session ID, and stored as a printing start command file in the command storage unit 132. Receiving the command request, the command processing unit 137 of the support server 130 makes a response by transmitting data including an HTTP response code "200 OK" and the printing start command to the MFP 110 (S31).

The response, for example, includes the following data.

```
 {
 "success":"'true"
 "command":"start_print"
 "filename":"pattern.pdf"
 "destination":"file.server.com/print/"
 "color":"color"
 "quality":"photo"
 "size":"A4"
 }
```

Here the *"success*": *"true*" represents that a command corresponding to the command request is present.

The *"command": "start_print"* represents a name of the command; here the name indicates that the command is the printing start command.

The *"filename":"pattern001.pdf"* represents that the file name of the image data of the test pattern stored in the file server 150 is "pattern001.pdf". This file name functions as image data identification information for identifying image data.

The *"destination": "file.server.com*/*print*/*"* represents a destination where the file of the image data of the test pattern is stored.

The *"color": "color"* represents that a printing parameter of color should be set to *"color".*

The *"quality": "photo*" represents that a printing parameter of printing quality should be set to *"photo".*

The *"size": "A4"* represents that a printing parameter of paper size should be set to *"A4"*.

In short, in the data described above, the *"command": "start_print"* represents printing starting instructions (image forming instructions); the *"filename":"pattern001.pdf"* represents image data to be printed; and the *"color ": "color ", "quality": "photo",* and *"size":"A4"* represent the values of parameters to be set for printing.

In addition, the *"destination":"file.server:com*/*print*/*"* represents a destination from which the image data for the remote maintenance is obtained.

The control unit 115 of the MFP 115 receives the command from the support server 130, and sends to the support server 130 a notification that the command is executable. The notification, for example, may be implemented by sending the following data to the destination "http: //support.cloud.com/report" according to POST method of HTTP (S32).

```
 {
 "command-result":"accepted"
 }
```

Here *"command-result": "accepted"* represents that the MFP 110 accepts the command from the support server 130.

The command processing unit 137 of the support server 130 notifies the MFP 110 of no objection by returning, in response to the notification from the MFP 110, an HTTP response code "2000K" with the following data (S33).

```
{
 "success":"true"
 }
```

The control unit 115 of the MFP 110 receives the HTTP response code in step S33 and starts to download the image data file of the test pattern. Here the control unit 115 accesses, through the transmitting and receiving unit 111, the file server 150 of the host name "file.server.com" according to the destination "file.server.com/print/". In this example, a protocol WebDAV (Abstract Web Distributed Authoring and Versioning) is used.

First, the control unit 115 of the MFP 110 transmits a HEAD command according to HTTP to the file server 150 in order to confirm that the storing folder "/print" is present in the file server 150 (S34).

Since the folder "/print" is present, the processing unit 155 of the file server 150 returns an HTTP response code "2000K" to the MFP 110 (S35).

Having confirmed that the folder "/print" is present, the control unit 115 makes a request for obtaining the image data of the test pattern from the file server 150. Here the control unit 115 requests for obtaining the image data with GET method "GET/print/pattern001.pdf" according to HTTP (S36).

According to the request, the processing unit 155 of the file server 150 transmits the image data "pattern001.pdf" to the MFP 111. Next, when the transmission of the image data is completed, the processing unit 155 of the file server 150 returns an HTTP response code "200OK" to notify the MFP 110 of the success of the file transmission (S37).

When the reception of the test pattern image data from the file server 150 is completed, the MPF 110 start to print with the printing unit 113 on the basis of the image data of the test pattern (S38). At this time, the printing unit 113 obtains the printing parameters transmitted in step S31 and carries out printing by using the obtained printing parameters. When the printing is completed, the control unit 115 of the MFP 110 sends to the support server 130 a notification of the completion of the command execution (S39). The notification is carried out by transmitting to the destination "http://support.cloud.com/report" the following data.

```
 {
 "command-result":"completed"
 }
```

In response to the notification from the MFP 110, the command processing unit 137 of the support server 130 returns an HTTP response code "2000K" with the following data to indicate the reception of the notification (S40).

```
 {
 "success":"true"
 }
```

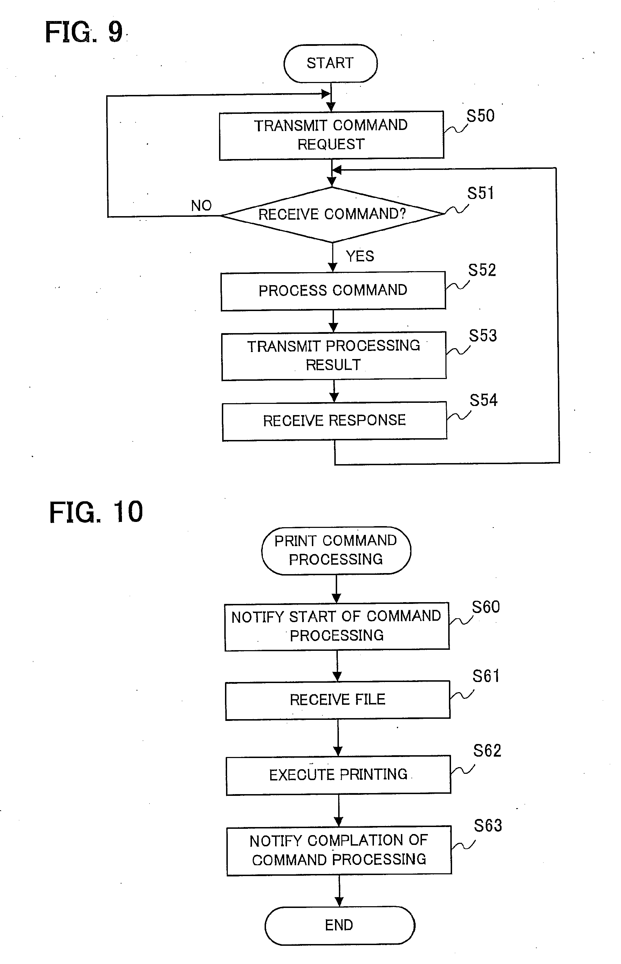

FIG. 9 is a flowchart showing processes executed by the MFP 110 when the start button 121 d is pressed in the MFP 110 to start a command inquiry to the support server 13 0 in the support center side.

When the start button 121 d of the MFP 110 is pressed by a user, the panel unit 112 notifies the control unit 115 of the press of the start button 121 d by the user. Receiving the notification, the control unit 115 transmits a command acquisition request to the support server 130 in order to obtain a command (S50).

Next, the control unit 115 determines whether or not a command is included in a response from the support server 130 (S51). If no command is included (No in S51), the processing returns to step S50 and the control unit 115 transmits a command request to the support server 130 again after waiting a predetermined time. If a command is included (Yes in S51), the processing proceeds to step S52.

In step S52, the control unit 115 processes the command. Details of the process in this step is are described by referring to FIG. 10.

When the process of the command is completed, the control unit 115 transmits a result of the process to the support server 130 (S53).

Then, when the control unit 115 receives a response from the support server 130 (S54), the process returns to step S51 and the control unit 115 checks whether or not a next command is received.

FIG 10 is a flowchart showing processes executed by the MFP 110 when a command is processed. An operation flow when the printing start command is processed will be described here.

When receiving a printing start command from the support server 130, the control unit 115 of the MFP 110 notifies the support server 130 of the start of the command processing before starting to receive a file (S60). The processing in this step corresponds to the processing in step S32 of FIG 8.

When receiving a response from the support server 130 indicating an acceptance of the start of the command (this corresponds to the processing in step S33 of FIG 8), the control unit 115 receives a file from the file server 150 (S61). This processing corresponds to the processing in steps S34 to S37 of FIG. 8.

When the file reception is completed, the printing unit 113 starts printing (S62). Here the printing is carried out by setting the values of parameters included in the printing start command.

When the printing is completed, the control unit 115 notifies the support server 130 of the completion of the printing (S63). This processing corresponds to the processing in steps S39 to S40 of FIG. 8.

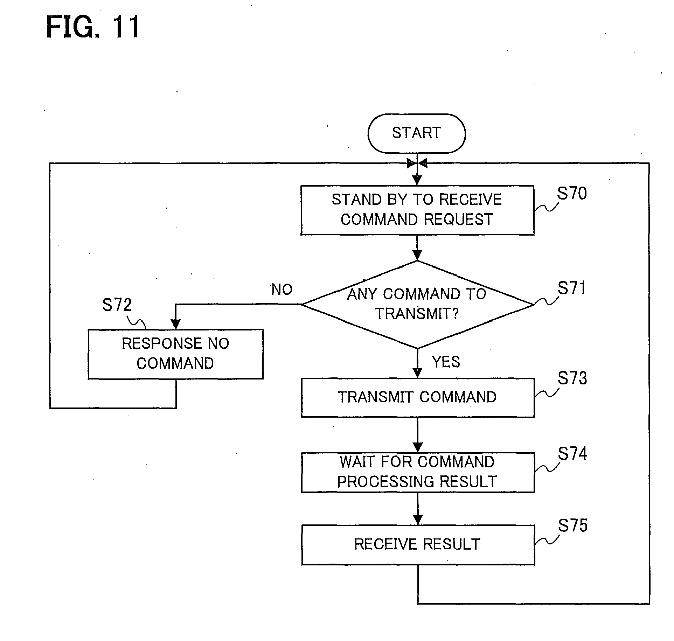

FIG 11 is a flowchart showing processes when the support server 130 receives a command request from the MFP 110.

The command processing unit 137 of the support server 130 stands by to receive a command request (S70).

On reception of a command request from the outside, the command processing unit 137 checks whether or not a command file corresponding to the command request is present in the command storage unit 132 (S71). If the corresponding command file is absent (No in S71), the command processing unit 137 responds that the corresponding command is absent, the processing returns to step S70, and the command processing unit 137 stands by to receive another command request. Besides, if the corresponding command file is present (Yes in S71), the processing proceeds to step S73.

In step S73, the command processing unit 137 transmits the command included in the corresponding command file stored in the command storage unit 132.

After transmitting the command, the command processing unit 137 waits for receiving a processing result of the command (S74).

If the processing result of the command is received, the command processing unit 137 ends the process (S75), the processing returns to step S70, and the command processing unit 137 is in a stand-by state for reception of another command request.

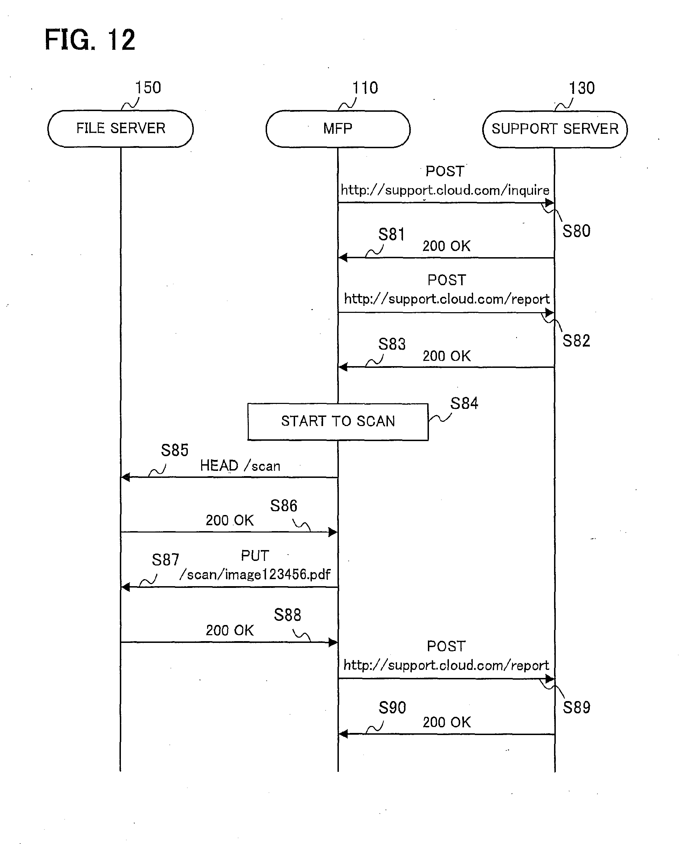

FIG. 12 is a sequence diagram showing processes in which the MFP 110 communicates with the servers 130, 150 in the support center side and transmits scan data.

When the start button 121 on the panel unit 112 is pressed, the control unit 115 of the MFP 110 transmits a command request to the support server 130 in the support center side via the transmitting and receiving unit 111 in order to make a command inquiry (S80). The command request is, for example, transmitted to a destination "http://support.cloud.com/inquire" according to POST method of HTTP.

Since the command request in this step is a request after the printing start command has been transmitted, the command processing unit 137 of the support server 130 recognizes the command request as a command request requesting for starting to scan.

In the support server 130, a scanning start command has been already generated according to the test conditions selected by the person in charge of the support center, and the scanning start command which is associated with the session ID stored as a scanning start command file in the command storage unit 132. Receiving the command request, the command processing unit 137 of the support server 130 makes a response to the MFP 110 by transmitting data including an HTTP response code "2000K" and the scanning start command (S81).

The response includes, for example, the following data.

```
 {
 "success":"true"
 "command":"start_scan"
 "filename": "image123456.pdf"
 "scansize":"A4"
 "density":"0"
 "document_type":"photo"
 "resolution":"200"
 "contrast":"0"
 "grayscale":"OFF"
 }
```

Here the *"success": "true*" represents that a command corresponding to the command request is present.

The *"command": "start_scan"* represents a name of the command; here the name indicates that the command is the scanning start command.

The *"filename":"image123456.pdf"* represents a file name when the result of scanning is stored in the file server 150. This file name functions as scan data identification information (read image data identification information) for identifying scan data.

The *"destination ": "file.server.com*/*scan*/*"* represents a file destination to which the result of scanning is stored.

The *"scan_size*"*:"A4"* represents a size of a scan area to be scanned.

The *"density":"0"* represents a correction value of scanning density.

The *"document_type":"photo"* represents a type of the original document to be scanned.

The *"resolution ": "200"* represents a value of scanning resolution.

The *"contrast": "0"* represents a value of scanning contrast.

The *"grayscale ": "OFF"* represents grayscale application is ON or OFF at the time of scanning.

That is, in the data described above, the *"command": "start_scan"* represents scanning starting instructions (image reading instructions); the *"filename": "image123456.pdf"* represents a file name of the scan data; and the *"scan_size": "A4", "density ":* "*0*", *"document_type":"photo", "resolution ": "200 ", "contrast":"0",* and *"grayscale": "OFF"* represent the values of parameters to be set at the time of scanning.

In addition, the *"destination":file.server.com*/*scan*/*"* represents a destination to which the scan data is transmitted.

The control unit 115 of the MFP110 receives the command from the support server 130, and sends to the support server 130 a notification that the command is executable. The notification, for example, may be implemented by sending the following data to the destination "http: //support.cloud.com/report" according to POST method of HTTP (S82).

```
 {
 "command-result":"accepted"
 }
```

In response to the notification from the MFP 110, the command processing unit 137 of the support server 130 returns an HTTP response code "2000K" with the following data to indicate no objection (S83).

```
 {
 "success":"true"
 }
```

The MFP 110 receives the HTTP response code transmitted in step S83 and then starts to scan an original document at the scanning unit 114 (S84). Here the scanning unit 114 obtains the values of the scan parameters included in the scanning start command received in step S81 and scans the original document by using the obtained values of the scan parameters.

Then, the control unit 115 of the MFP 110 accesses, through the transmitting and receiving unit 111, the destination included in the scanning start command received in step S81. Here the control unit 115 accesses, through the transmitting and receiving unit 111, the file server 150 of the host name "file.server.com" according to the destination "file.server.com/scan/". In this example, a protocol WebDAV is used.

First, the control unit 115 of the MFP 110 transmits a HEAD command according to HTTP to the file server 150 in order to confirm that the storing a storage destination folder "/scan" is present in the file server 150 (S85).

Since the folder "/scan" is present, the processing unit 155 of the file server 150 returns an HTTP response code "2000K" to the MFP 110 (S86).

Having confirmed that the folder "/scan" is present, the control unit 115 transmits the scan data read in the scanning to the file server 150 (S87). By using PUT method according to HTTP, "PUT/scan/image123456.pdf", for transmitting data, the scan data is transmitted.

When the data storing is completed, the processing unit 155 of the file server 150 returns an HTTP response code "2000K" to notify the MFP 110 of the success of the file storing (S88).

When storing the scan data in the file server 150 is completed, the control unit 115 of the MPF 110 sends to the support server 130 a notification of the completion of the command execution (S89). The notification is carried out by transmitting to the destination "http://support.cloud.com/report" the following data.

```
 {
 "command-result":"completed"
 }
```

In response to the notification from the MFP 110, the command processing unit 137 of the support server 130 returns an HTTP response code "2000K" with the following data to indicate the reception of the notification (S90).

```
 {
 "success":"true"
 }
```

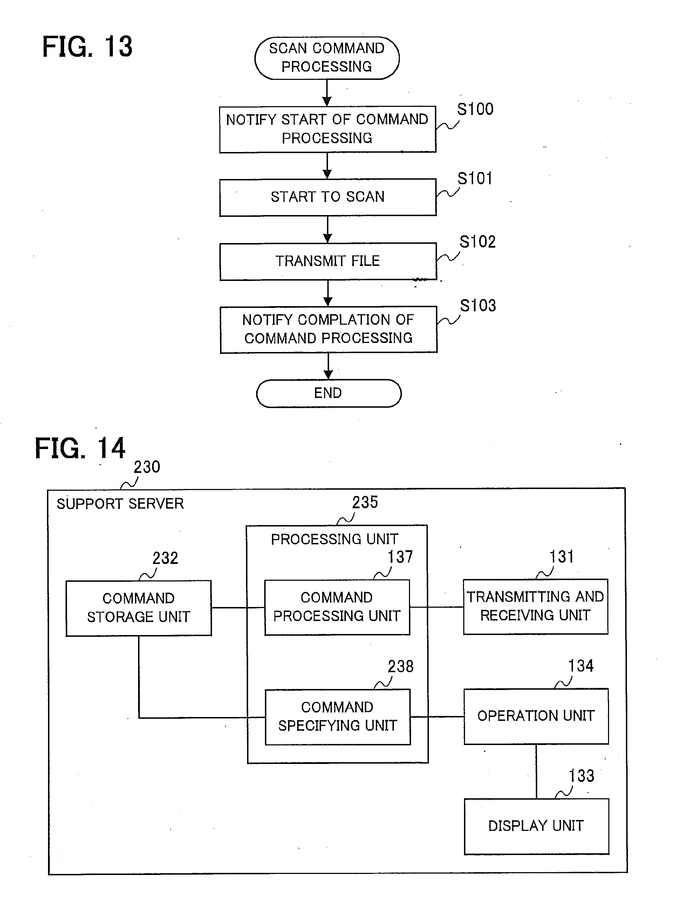

FIG. 13 is a flowchart showing processes executed by the MFP 110 when a command is processed. An operation flow when the scanning start command is processed will be described here.

Receiving the scanning start command from the support server 130, the control unit 115 of the MFP 110 notifies the support server 130 of a start of the command processing before starting to scan (S100). The processing in this step corresponds to the processing in step S82 of FIG. 12.

Receiving from the support server 130 a response indicating acceptance of the start of the command (this processing corresponds to the processing in step S83 of FIG. 12), the scanning unit 114 starts to read an original document (S101). Here the scanning is carried out by setting the values of parameters included in the scanning start command.

When the scanning is completed, the control unit 115 transmits the read scan data to the file server 150 (S102). This processing corresponds to the processing in steps S85 to S88 of FIG. 12.

When the transmission of the scan data is completed, the control unit 115 notifies the support server 130 of the completion of-the processing of the scanning start command (S103). This processing corresponds to the processing in steps S89 to S90 of FIG. 12.

As described above, according to the first embodiment, the values of the scan parameters are automatically determined according to the contents of the printing on the basis of the image data of the test pattern specified by the support center and the determined values are set to the MFP 110. So, the MFP 110 can set the suitable values of the parameters according to the contents of the test pattern and carry out printing and scanning, without requiring setting by the user.

### Second Embodiment

As is shown in FIG. 1, a remote maintenance system 200 in the second embodiment includes a MFP 110, a support server 230 and a file server 150.

The MFP 110 and file server 150 in the second embodiment have configurations similar to those in the first embodiment, and therefore the support server 230 will be described below.

FIG. 14 is a block diagram schematically showing the structure of the support server 230 in the second embodiment.

The support server 230 includes a transmitting and receiving unit 131, a command storage unit 232, a display unit 133, an operation unit 134, and a processing unit 235.

The transmitting and receiving unit 131, the display unit 133, and the operation unit 134 in the second embodiment have configurations similar to those in the first embodiment, and therefore the command storage unit 232 and the processing unit 235 will be described below.

The command storage unit 232 stores, for each set of test conditions, printing conditions and scanning conditions with both the conditions associated with each other. Specifically the command storage unit 232 stores, for each set of test conditions, a printing start command file and a scan start command file which are associated with each other.

The processing unit 235 controls processes by the support server 230. The processing unit 235 includes a command processing unit 137 and a command specifying unit 238.

The command processing unit 137 has a similar configuration to that in the first embodiment, and therefore the command specifying unit 238 will be described below.

The command specifying unit 238 causes the display unit 133 to display a screen for selecting test conditions which are used for fault diagnosis of the MFP 110 and accepts selection of test conditions to be used from the person in charge of the support center with the operation unit 134. Then, the command specifying unit 238 causes the printing start command file and scanning start command file corresponding to the selected test conditions to be associated with the session ID in the command storage unit 232. The associating may be carried out in the same way as in the first embodiment.

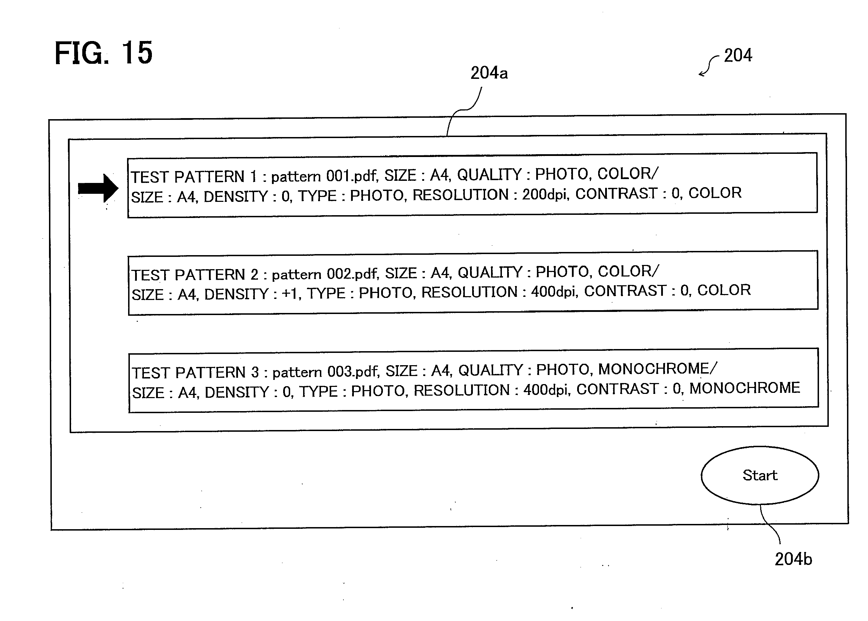

FIG. 15 is a schematic diagram showing an example of a screen displayed on the display unit 133 when test conditions are selected.

A conditions selecting screen 204 has a test conditions selecting area 204a and a start button 204b.

In the test conditions selecting area 204a, a plurality of sets of test conditions are displayed; image data used for a test pattern, items and values of printing parameters, and items and values of scanning parameters are associated in each set of test conditions. The person in charge of the support center selects a set of test conditions to be used out of the plurality of sets of test conditions displayed in the test conditions selecting area 204a with the operation unit 134.

The start button 204b is an area for inputting instructions to carry out fault diagnosis by using a command file corresponding to the test conditions selected in the test conditions selecting area 204a. When the start button 204b is pressed, the command specifying unit 238 causes a printing start command file and a scanning start command file corresponding to the selected test conditions to be associated with the session ID. Hereinafter, in this session, the fault diagnosis is carried out by using the printing start command file and the scanning start command file which are associated with the session ID.

As described above, according to the second embodiment, as the printing start command and the scanning start command are associated in advance, the person in charge of the support center can select test conditions easily.

In the first and second embodiments described above, the MFP 110 is described as an example of the image forming device but it is not limited to the example. The image forming device may be, for example, a copier, a facsimile apparatus, or the like.

In the first and second embodiments described above, the MFP 110 accesses the Internet 103 via the LAN 101 but it is not limited to this example. As long as the MFP 110 can access the support server 130 or 230 and the file server 150, any other network configuration may be applied.

In the first and second embodiments described above, the support server 130 or 230 and the file server 150 are included but these servers may be configured by a single server. Furthermore, the file server 150 stores image data and scan data for remote maintenance but the file server 150 may be divided into a server that stores image data and a server that store scan data.

In the first and second embodiments described above, the MFP 110 is configured to obtain image data corresponding to a test pattern from the file server 150 but it is not limited to this example. For example, the MFP 110 may include a storage unit which is not shown in the drawings, the storage unit may store a A plurality of image data items corresponding to a plurality of test patterns in advance and the printing start command may specify which of the plurality of image data items is to be used.

Furthermore, the storage unit may store printing conditions and scanning conditions which are associated with each other. Which of the printing conditions and scanning conditions is to be used in a printing start command and a scanning start command from the support server 130 or 230 may be specified, for example, by identification information such as an ID. The identification information here may be a combination of printing conditions identification information (image forming conditions identification information) for identifying printing conditions and scanning conditions identification information (image reading conditions identification information) for identifying scanning conditions, or it may be conditions identification information for identifying a combination of printing conditions and scanning conditions. The printing unit 113 or the scanning unit 114 obtains printing conditions or scanning conditions from the storage unit to use, on the basis of such identification information.

## Claims

1. An image forming device (110) comprising:
an operation unit (112) to receive input of operations;
a managing unit (115) to change a mode of the image forming device (110) from a normal mode to a remote maintenance mode for carrying out remote maintenance on the basis of the input of the operations received by the operation unit (112);
a receiving unit (111) to receive image forming instructions and image reading instructions in the remote maintenance mode;
an image forming unit (113) to form an image on a medium on the basis of image data for remote maintenance according to the image forming instructions in the remote maintenance mode;
an image reading unit (114) to read the medium on which the image is formed by the image forming unit (113) according to the image reading instructions in the remote maintenance mode, thereby generating read image data; and
a transmitting unit (111) to transmit the read image data generated by the image reading unit (114) in the remote maintenance mode.

2. The image forming device (110) according to claim 1, wherein
the image forming unit (113) obtains image forming conditions including values of parameters necessary for forming the image and uses the values of the parameters included in the obtained image forming conditions to form the image on the medium in the remote maintenance mode; and
the image reading unit (114) obtains image reading conditions including values of parameters necessary for reading for the read image date and uses the values of the parameters included in the obtained image reading conditions to read the medium on which the image is formed by the image forming unit (113), the image reading conditions being associated with the image forming conditions.

3. The image forming device (110) according to claim 2,
wherein, in the remote maintenance mode,
the receiving unit (111) receives the image forming conditions and the image reading conditions;
the image forming unit (113) obtains the image forming conditions from the receiving unit (111); and
the image reading unit (114) obtains the image reading conditions from the receiving unit (111).

4. The image forming device (110) according to claim 3, wherein the receiving unit (111) receives the image forming conditions and the image reading conditions from an external device (130) which stores the image forming conditions and the image reading conditions which are associated with each other.

5. The image forming device (110) according to claim 3 or 4, wherein
the image forming instructions and the image forming conditions are included in a first command;
the image reading instructions and the image reading conditions are included in a second command; and
the receiving unit (111) receives the first command and the second command.

6. The image forming device (110) according to any one of claims 2 to 5, wherein the image forming conditions further include image data identification information for identifying the image data for remote maintenance and a destination from which the image data for remote maintenance is obtained;
the image forming device (110) further comprising an obtaining unit (115) to obtain the image data for remote maintenance which are identified with the image data identification information from the destination included in the image forming conditions in the remote maintenance mode; and wherein
the image forming unit (113) forms the image on the medium on the basis of the image data for remote maintenance obtained by the obtaining unit (115).

7. The image forming device (110) according to any one of claims 2 to 6, wherein
the image reading conditions further include a destination to which the read image data generated by the image reading unit (114) are to be transmitted; and
the transmitting unit (111) transmits the read image data to the destination included in the image reading conditions.

8. The image forming device (110) according to claim 7, wherein
the image reading conditions further include read image data identification information for identifying the read image data;
the image reading unit (114) attaches the read image data identification information to the read image data; and
the transmitting unit (111) transmits the read image data identification information attached to the read image data together with the read image data to the destination included in the image reading conditions.

9. An image forming method that is carried in an image forming device (110), comprising:
receiving input of operations;
changing a mode of the image forming device (110) from a normal mode to a remote maintenance mode for carrying out remote maintenance on the basis of the input of the operations;
receiving image forming instructions in the remote maintenance mode;
forming an image on a medium on the basis of image data for remote maintenance according to the image forming instructions in the remote maintenance mode;
receiving image reading instructions in the remote maintenance mode;
reading the medium on which the image is formed according to the image reading instructions in the remote maintenance mode, thereby generating read image data;
transmitting the read image data generated in the remote maintenance mode; and
changing the mode of the image forming device (110) from the remote maintenance mode to the another mode.
